# EUROPEAN PATENT APPLICATION

(11) **EP 2 869 213 A1**
(43) Date of publication of application: **06.05.2015**
(21) Application number: 13306490.7
(22) Date of filing: 31.10.2013
(51) Int. Cl.: G06F 17/30

(54) **Media content ordering system and method for ordering media content**

(71) Applicant: ALCATEL LUCENT, 92100 Boulogne-Billancourt (FR)
(72) Inventor: Namboodiri, Vinay, 2018 Antwerp (BE); Rondao Alface, Patrice, 2018 Antwerp (BE); Aerts, Maarten, 2018 Antwerp (BE)
(74) Representative: D'Halleweyn, Nele Veerle Trees Gertrudis

(57) **Abstract**

The present invention relates to a media content ordering system and to a method for ordering media content.

According to the invention, media content items are ordered in two different spaces, i.e. metadata space and feature space. This allows a user to select and retrieve desired content more easily. Media content that is clustered in either space represents similar media content.

Suggestions can be made to the user taking into account the preferences of the user with respect to features and metadata particulars. By minimizing the difference in order in both spaces, it is ensured that suggestions to a user are close both in feature space and metadata space.

## Description

The present invention relates to a media content ordering system and to a method for ordering media content. The present invention further relates to a computer-readable storage medium comprising instructions for performing the method of the invention.

Large media content databases are becoming more and more available. Content in these databases is usually provided with or is or can be associated with metadata. Examples of such metadata are the data provided by third parties, such as IMDB, for describing movie content. This metadata may comprise fields describing the story line, the cast, production data etc. In this example, the metadata is comprised in a database that is separate from the content that the metadata describes. In other cases, the metadata is made part of the actual media content file and/or the metadata is made part of the same database.

Methods to order the media content based on metadata are known in the art. To this end, various techniques can be employed that rely inter alia on semantic distances. For instance, to determine which movies are more related to each other than to other movies, semantic distances are computed for each pair of movies in the database. When a user selects a particular movie, other movies, similar to the selected movie, may be presented to the user. Here, the concept is similarity is related to the semantic distances, wherein items are considered to be similar when their semantic distance is small.

As a simple example, assume that the user selects action movies. Based on the metadata, other action movies may be presented to the user.

It should be known to the skilled person that the computation of semantic distances also takes into account synonyms. For instance, when a user selects a thriller type of movie, he will also be presented with suspense type of movies.

A problem exists when new media content is to be added to a database, which media content does not comprise metadata. For instance, a user may wish to add his or her collection of untagged movies recorded with a portable device, such as a mobile phone, to his existing and tagged media content collection. Because the content to be added does not comprise metadata, it becomes impossible to order the new media content based on metadata. In such case, the media content itself may be analyzed. To that end, feature analyzers may be used which examine the content and output a feature vector that comprises one or more fields that describe the outcome of the feature analysis. These feature analyzers are known in the art.

As an example, a feature analyzer may perform a color analysis on the movie. In such case, the colors, averaged over a particular length of the movie, are determined. A possible output vector could then be a set of color coordinates. More generic feature analyzers are also possible that would for instance analyze facial features of persons acting in a movie, analyze whether particular sounds occur during the movie. Other examples are analyzers for analyzing actions performed in a movie, actor pose analyzers, scene characteristic analyzers (type of scene such as urban, indoors, nature), camera motion analyzers, global and local color histograms, dominant motion analyzers, etc. Using the output of the feature analyzers, media content may be ordered.

When media content is ordered, either by using metadata or by using feature analyzer output, a user may retrieve desired content more conveniently. For instance, if a user selects a particular movie based on a feature or given metadata, he can be presented with movies that have similar features or metadata.

However, a large disadvantage exist when combining both ordering techniques. This is related to the fact that movies that are similar based on metadata, may not be similar based on the feature analyzer output. Hence, a concise suggestion to a user regarding media content that should be of interest to the user cannot be given.

An object of the present invention is to provide a solution to the abovementioned problem.

This object is achieved with a media content ordering system as defined by claim 1.

The media content ordering system of the present invention is configured to order content in a content database that holds a plurality of media content items, wherein each media content item is associated with metadata describing that media content item.

According to the invention, the system comprises a feature analyzer device comprising a plurality of different feature analyzers that are each configured to perform feature analysis regarding a different feature on each of the media content items comprised in the content database, each feature analyzer outputting a feature vector that describes a presence of the feature in the media content item.

The system also comprises a weighting unit for applying a weighting using weighting coefficients to the outputted feature vectors and a feature vector ordering unit for ordering the weighted outputted feature vectors in an ordered feature vector space.

Additionally, the system comprises a metadata ordering device for ordering the media content items in an ordered metadata space based on the associated metadata.

According to the invention, the weighting unit is configured to change the weighting coefficients such that a difference between the order of the media content items in the ordered feature space and the order of the media content items in the ordered metadata space is minimized. To this end, a predefined or user adjustable threshold may be uses.

According to the invention, media content items are ordered in two different spaces, i.e. metadata space and feature space. This allows a user to select and retrieve desired content more easily. Media content that is clustered in either space represents similar media content. Concise suggestions can be made to the user taking into account the preferences of the user with respect to features and metadata particulars. By minimizing the difference in order in both spaces, it is ensured that suggestions to a user are close both in feature space and metadata space.

The ordering of media content items may comprise arranging media content items in a space allowing similarity between media content items to be determined based on a distance between the arranged media content items.

In a further or alternative embodiment, the media content ordering system further comprises a content retrieval unit for retrieving a desired media content item from the content database and for suggesting and/or retrieving media content items that are similar to said desired media content item.

In a further or alternative embodiment, the feature analyzer device comprises n feature analyzers that each output a feature vector having *k* fields, each field holding a scalar value, and wherein the ordered feature vector space is *k*-dimensional or n x *k*-dimensional.

In a further or alternative embodiment, the metadata ordering system is configured to output a metadata vector having f fields, each field corresponding to a different item of metadata, and wherein the ordered metadata space is *f*-dimensional.

In a further or alternative embodiment, similarity between media content items is determined using a metric of the feature or metadata space, such as an Euclidian metric, allowing a distance between media content items to be determined, wherein media content items that are separated by a small distance have a high similarity.

In a further or alternative embodiment, the distance between media content items in the ordered metadata space corresponds to a semantic distance between these items.

In a further or alternative embodiment, the weighting unit is configured to apply weighting coefficients to each field of each feature vector or to each feature vector as a whole.

In a further or alternative embodiment, the media content ordering system further comprises a weighting coefficient correlator for correlating weighting coefficients with the order of the media content in the ordered feature space and/or ordered metadata space, and a weighting coefficient adjustment unit for allowing a user to adjust the weighting coefficients based on the correlation between the weighting coefficients and the order of the media content items in the ordered feature space and/or ordered metadata space. Here, the weighting coefficient correlator is preferably configured to determine which weighting coefficients are relatively high for media content items of interest. Moreover, the weighting coefficient adjustment unit is preferably configured to present the user with a user interface (UI) that enables the user to identify relevant weighting coefficients and to enable the user to change the weighting coefficients.

In a further or alternative embodiment, the media content ordering system further comprises a metadata input unit for inputting metadata related to desired media content items, a desired content input unit for inputting an indication regarding desired content, and/or a desired feature input unit for inputting an indication regarding a desired feature.

According to a second aspect, the present invention provides a method for ordering content in a content database that holds a plurality of media content items, wherein each media content item is associated with metadata describing that media content item.

According to the present invention, the method comprises performing feature analysis regarding different features on each of the media content items comprised in the content database. For each analyzed feature, a feature vector is outputted that describes a presence of the feature in the media content item.

The method further comprises ordering the media content items in an ordered metadata space based on the associated metadata and applying a weighting using weighting coefficients to the outputted feature vectors.

The weighted outputted feature vectors are ordered in an ordered feature vector space.

According to the invention, the weighting coefficients are changed such that a difference between the order of the media content items in the ordered feature space and the order of the media content items in the ordered metadata space is minimized.

The method may further comprise retrieving a desired media content item from the content database and suggesting and/or retrieving media content items that are similar to said desired media content item.

The method may additionally or alternatively comprise correlating weighting coefficients with the order of the media content items in the ordered feature space and/or ordered metadata space, and allowing a user to adjust the weighting coefficients based on the correlation between the weighting coefficients and the order of the media content in the ordered feature space and/or ordered metadata space.

According to a third aspect, the present invention provides a computer program and/or a computer-readable storage medium comprising instructions for performing the above described method.

Next, the invention will be more described in detail referring to the appended drawings, wherein:
Figure 1 illustrates an embodiment of a media content ordering system according to the present invention;
Figure 2 shows how a new movie, which does not have any metadata associated with it, can be ordered according to the invention;
Figure 3 illustrates an embodiment of the present invention, wherein a user is able to adjust the weighting process;
Figure 4 depicts how a user may retrieve content from the content database according to the invention; and
Figure 5 illustrates a method for ordering media content according to the present invention.

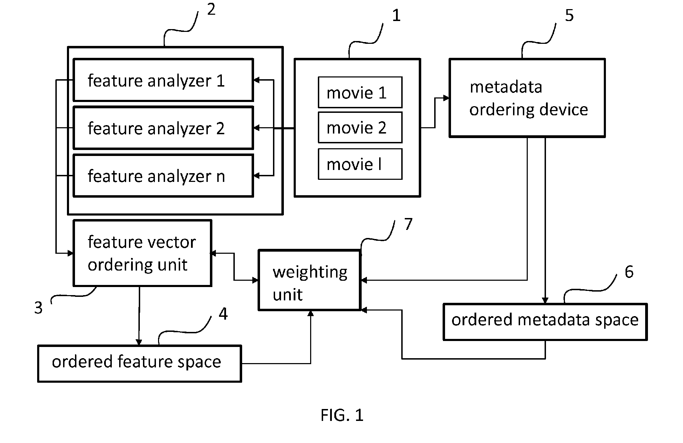

Figure 1 illustrates an embodiment of a media content ordering system according to the present invention. The system is configured to order media content in a media content database 1. In the example given in figure 1, media content database 1 is a movie database, that comprises *l* movies movie 1 .. movie l, wherein *l* is much larger than 1.

The system comprises a feature analyzer device 2 for performing feature analysis on each of the movies comprised in database 1. Feature analyzer device 2 comprises n feature analyzers, wherein n is equal to or larger than 1.

Each feature analyzer outputs a feature vector having one or more scalar fields that describe the presence of a feature in the content. A feature analyzer may be configured to determine a feature difference between the media content in database 1 and a predefined reference. In this case, the outputted feature vector indicates the difference of a feature between that feature in a movie and a predefined feature reference. As an example, a feature analyzer may perform facial recognition and compare features in a person's face with a predefined reference. The feature analyzer may determine the distance between a person's eyes, the distance between a person's ears, etc. The outputted feature vector may comprise fields, wherein each field holds a respective value representing a particular distance. However, each field may also hold a value that represents a difference with a reference.

The ordering of feature vectors can be performed when the feature vectors have different lengths. In such cases, the short vectors may be lengthened by adding predefined scalar values, such as zeros.

It is noted that feature analysis on media content is known in the art.

The system further comprises a feature vector ordering unit 3. This unit orders the outputted feature vectors such that a distance between the ordered feature vectors indicates similarity between analyzed media content items with respect to analyzed features. As an example, each feature analyzer may output a feature vector having *k* fields. The output of the feature analyzer device is then n times *k* values.

As a first example, the n feature vectors can be arranged in a *k*-dimensional space, which can be referred to as an ordered feature space 4. Each point in the *k-*dimensional feature space represents the result of a single feature analysis of a single movie.

As a second example, the n vectors can be arranged in a n x *k*-dimensional space, which can equally be referred to as an ordered feature space 4. Each point in the n x *k-*dimensional feature space represents the result of all the feature analyses of a single movie.

To determine the similarity between movies, the distance can be determined for each feature analysis separately, using the *k*-dimensional space, and then combine the n computed distances to determine an overall similarity. Alternatively, the n x *k*-dimensional space may be used wherein the distance between points is directly representative for the similarity between movies.

The skilled person is aware of various ways by which the distance between points in space may be determined. As an example, the Euclidian distance between points may be calculated.

The system further comprises a metadata ordering device 5 that uses metadata corresponding to each of the movies in database 1 to order the movies. Similar to the feature analyzer device 2, metadata ordering device 5 may comprise analyzers that analyze a particular metadata field. For instance, an analyzer may be provided that determines the type of movie.

Metadata ordering device 5 produces an ordered metadata space 6. Similar to feature analyzer device 2, metadata ordering device 5 may output *p* vectors, each vector having *q* fields holding numerical values. The values are a numerical representation of metadata comparison allowing a semantic distance to be calculated to determine similarity between the movies. Ordered metadata space 6 may be a *q*-dimensional or *q* x *p*-dimensional space, similar to ordered feature space 4.

Using ordered metadata space 6, a user is able to retrieve content that is similar to previously identified or desired content. For instance, using ordered metadata space 6, a user is able to retrieve action-type movies starring the actor Nicholas Cage, based on a previous selection of such a movie, such as the movie "Face-off".

Similarly, using ordered feature space 4, a user is able to retrieve movies having features that are similar to previously identified or desired content. For instance, a user is able to retrieve movies that have a lot of beach scenes based on a previous movie that had a lot of those scenes. It is noted that a beach scene can for instance be detected using color information.

The order in ordered feature space 4 depends on the features that are analyzed. These are different than the metadata that is examined. Consequently, the order in ordered feature space 4 is different than that in ordered metadata space 6, causing inconvenience for the user.

To solve this problem, the system comprises a weighting unit 7 which works together with feature vector ordering unit 3. Weighting unit 7 is configured to weigh the output of the feature analyzer device 2 such that a difference in the order of the movies in ordered feature space 4 and the order of the movies in ordered metadata space 6 is minimized. Within the context of the present invention, "an ordering of media content" should be construed as an arrangement of media content allowing similarity between media content to be determined based on a distance between the arranged media content. Furthermore, the difference in order can for instance be determined by choosing a media content item and determining a list of similar content items wherein the ranking of an item on the list is determined by the distance in feature space or metadata space to the chosen media content item. This process can be repeated for more or all the media content items in content database 1. A difference in order could in this case be computed by determining how different the ranking is between the different spaces for each, some, or all determined lists.

As an example, weighting unit 7 applies a weighting to each feature vector as a whole. In such case, weighting unit 7 in figure 1 would comprise n weighting coefficients. Alternatively, a weighting can be applied to each field of each feature vector resulting in n *x k* weighting coefficients. It should be noted that when using different feature vector lengths, the dimensionality of the feature space could be equal to the sum of different feature vector fields. In such case, a similar amount of weighting coefficients can be used.

Weighting unit 7 is configured to determine the weighting coefficients such that the difference in order of movies in ordered feature space 4 and the order of these movies in ordered metadata space 6 is minimized. Preferably, the order in both spaces is made identical.

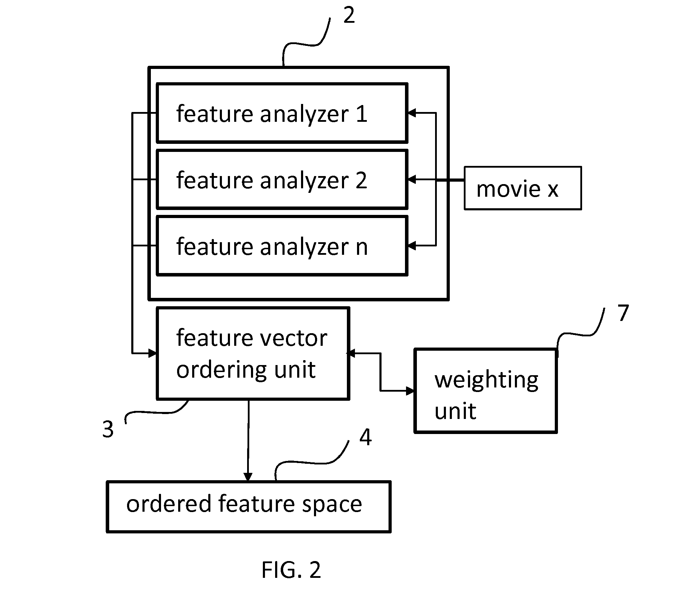

The advantage of trying to achieve the same order in feature vector space 4 and metadata space 6 is explained referring to figure 2, which illustrates ordering a new movie, i.e. movie x, which does not have any metadata associated with it.

Feature analyzer device 2 performs the feature analysis on movie x. Feature vector ordering unit 3 arranges the output of feature analyzer device 2 in the ordered feature space 4. During the ordering, the weighting using the previously determined weighting coefficients is applied by weighting unit 7.

According to the invention, a movie without metadata is ordered in feature space. Its place in ordered feature space 4 is an estimation of its order in ordered metadata space 6 in case the movie would have had metadata. It should be apparent to the skilled person that the accuracy of this method increases when the number of feature analyzers, metadata analyzers, and the number of movies having metadata in database 1 increases.

Although explained referring to movies, the method could also be applied to other types of media content, such as music files. In this case, the feature analysis could refer to the beats per second, the spectral distribution, the number of musical instruments or the type of musical instruments, etc.

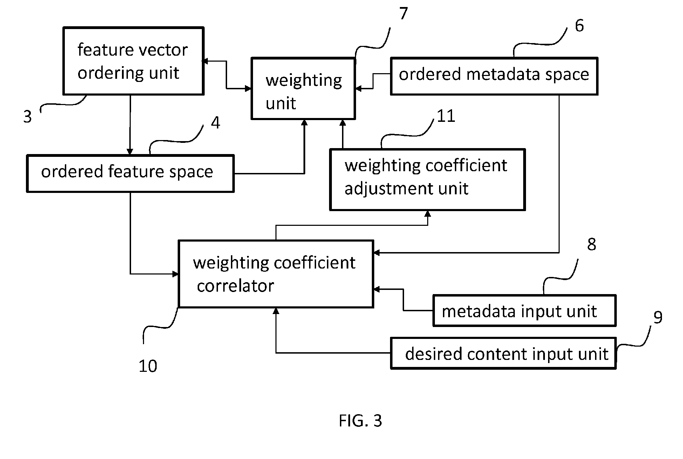

Figure 3 illustrates a further embodiment, wherein a user is able to adjust the weighting process. Typically, the weighting factors are incomprehensible to a user. To solve this problem, the system comprises a weighting coefficient correlator 10 which correlates weighting coefficients with the order of the media content items in ordered feature space 4 and/or ordered metadata space 6. Here, it is noted that as a result of the steps depicted in figure 2, the order in both spaces may be made identical. As an example, weighting coefficient correlator 10 determines which weighting coefficients are dominant, e.g. relatively high, for media content items of interest. The collection of these weighting coefficients is indicated to a user. For instance, the weighting coefficient(s) can be indicated with a different color and/or shape in a user interface.

The system may further comprise a weighting coefficient adjustment unit 11 which is configured to allow a user to adjust the weighting coefficients. The adjustment may be performed on each weighting coefficient individually, on the weighting coefficients belonging to the same feature vector as a whole, or on groups of weighting coefficients that correspond to different feature vectors. For example, weighting coefficient correlator 10 may have determined that particular weighting coefficients belonging to different fields of different feature vectors are relatively high compared to other fields. Here, it should be noted that at the start of the iterative weighting process, each field is given a predefined value, preferably equal for all fields. Once a field holds a value that exceeds that predefined value, it can be concluded that this field has been given more weight than other fields in order to ensure that the order in ordered feature space 4 becomes equal or similar to the order in ordered metadata space 6. This, and other fields also being relatively high, can be presented by weighting coefficient adjustment unit 11 to the user in such a manner that a user can identify that these fields are dominant. Alternatively or additionally, weighting coefficient correlator 10 may receive input from metadata input unit 8 and desired content input unit 9. For instance, a user may input metadata using metadata input unit 8, e.g. a type of movie the user prefers, allowing weighting coefficient correlator 10 to determine, by means of correlation, the relevant weighting coefficients. A user may also input which content in database 1 is desired through desired content input unit 9. This allow weighting coefficient correlator 10 to determine the weighting coefficients that is relevant for that desired content.

It should be apparent to the skilled person, that the weighting coefficients may have arbitrary values and that a high value may also refer to a high absolute value.

Weighting coefficient adjustment unit 11 may further present the user with a user interface (UI) that enables the user to identify relevant weighting coefficients and to enable the user to change the weighting coefficients. As a result of the adjustment, the order in ordered feature space 4 may become different from the order in ordered metadata space 6.

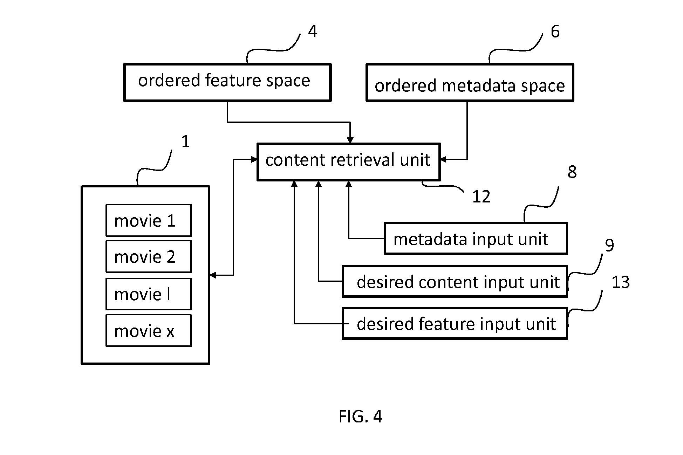

Figure 4 illustrates how a user may retrieve content from database 1. To that end, the system comprises a content retrieval unit 12. It receives input from metadata input 8, desired content input unit 9, and/or desired feature input unit 13. Content retrieval unit 12 operates on database 1, which now also comprises the previously ordered movie x. As an example, the user inputs metadata relating to action type movies using metadata input unit 8. As a result, content retrieval unit 12 will fetch movies from content database 1 that have that particular metadata. However, at the same time, content retrieval unit 12 will suggest other media content items to the user that are found to be similar based on ordered metadata space 6 and/or ordered feature space 4.

Figure 4 illustrates how the weighting process explained in conjunction with figure 3 can be of benefit to the user. Because the order in ordered feature space 4 can also be taken into account, the user can be provided with suggestions that are of interest to him which would normally not be suggested if the retrieval had been based on the order in ordered metadata space 6 only. Suggestions are generated by first determining the position of the content item in ordered feature space 4 and/or ordered metadata space 6 that complies with the inputted metadata by metadata input unit 8. Next, suggestions are found by examining which content items lie within a particular range from that content item. A narrow range implicates that content should be very similar. Preferably, the range, e.g. the maximum Euclidian distance between content in ordered feature space 4 and/or ordered metadata space 6, may be user adjustable or predefined.

As a further example, a user may input desired content, e.g. the name of a movie, using desired content input unit 9. Once this content item is identified in database 1, if it is present, content retrieval unit 12 may suggest other similar content as described above.

A user may also input desired features using desired feature input unit 13. In this case, content retrieval unit 12 will scan the ordered feature space 4 to determine content that corresponds to the input. At the same time, it can suggest content that is similar. It may also, once content has been identified in ordered feature space 4, consult the ordered metadata space 6 for further suggestions.

As described above, the user may consult two different spaces of ordered content, which allows a user to be provided with suggestions that would normally not be provided to him.

It should be noted that the process in figures 3 and 4 can be performed iteratively. Once a user determines that the suggestions do not comply with this interest, the user may change the weighting using weighting coefficient adjustment unit 11.

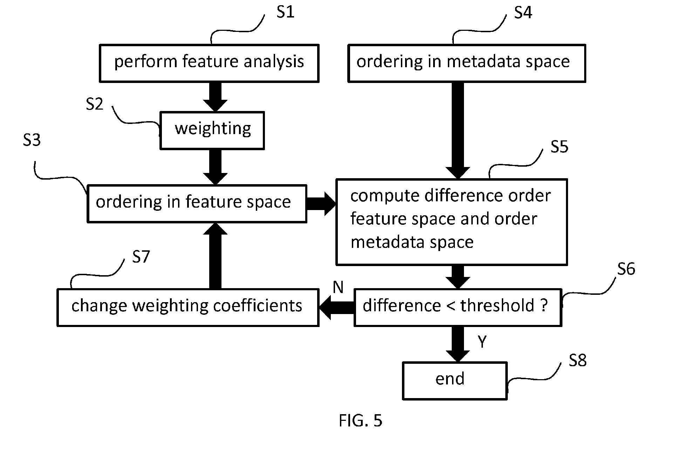

Figure 5 illustrates a method for ordering media content according to the present invention.

In a step S1, a feature analysis is performed on each of the media content items in a content database regarding a plurality of features. As a result, feature vectors are outputted which are weighted, in step S2, by applying weighting coefficients. The weighted outputted feature vectors are ordered in feature space in step S3.

Meanwhile, in step S4, media content items are ordered in metadata space for instance based on semantic distances between the metadata of the different media content items.

In step S5, a difference between the order of media content items in the ordered feature space and the order of media content items in the ordered metadata space is computed. This difference is compared to a threshold in step S6. If the difference, e.g. the absolute value thereof, is larger than a predefined or user adjustable threshold, the weighting coefficients are changed in step S7. In case the difference is smaller than the threshold, the method ends in step S8.

Although the invention has been described using embodiments thereof, the skilled person in the art would appreciate that various modifications can be made without departing from the scope of the invention which is defined in the appended claims.

## Claims

1. A media content ordering system configured to order content in a content database that holds a plurality of media content items, wherein each media content item is associated with metadata describing that media content item, the system comprising:
a feature analyzer device comprising a plurality of different feature analyzers that are each configured to perform feature analysis regarding a different feature on each of the media content items comprised in the content database, each feature analyzer outputting a feature vector that describes a presence of the feature in the media content item;
a metadata ordering device for ordering the media content items in an ordered metadata space based on the associated metadata;
a weighting unit for applying a weighting using weighting coefficients to the outputted feature vectors;
a feature vector ordering unit for ordering the weighted outputted feature vectors in an ordered feature vector space;
wherein the weighting unit is configured to change the weighting coefficients such that a difference between the order of the media content items in the ordered feature space and the order of the media content items in the ordered metadata space is minimized.

2. The media content ordering system of claim 1,
wherein an ordering of media content items comprises arranging media content items in a space allowing similarity between media content items to be determined based on a distance between the arranged media content items.

3. The media content ordering system of claim 1 or 2, further comprising a content retrieval unit for retrieving a desired media content item from the content database and for suggesting and/or retrieving media content items that are similar to said desired media content item.

4. The media content ordering system of any of the previous claims, wherein the feature analyzer device comprises n feature analyzers that each output a feature vector having *k* fields, each field holding a scalar value, and wherein the ordered feature vector space is *k-*dimensional or n x *k*-dimensional.

5. The media content ordering system of any of the previous claims, wherein the metadata ordering system is configured to output a metadata vector having f fields, each field corresponding to a different item of metadata, and wherein the ordered metadata space is *f*-dimensional.

6. The media content ordering system of claim 4 or 5, wherein similarity between media content items is determined using a metric of the feature or metadata space, such as an Euclidian metric, allowing a distance between media content items to be determined, wherein media content items that are separated by a small distance have a high similarity.

7. The media content ordering system of claim 6,
wherein the distance between media content items in the ordered metadata space corresponds to a semantic distance between these items.

8. The media content ordering system of claim 6 or 7, wherein the weighting unit is configured to apply weighting coefficients to each field of each feature vector or to each feature vector as a whole.

9. The media content ordering system of claim 8, further comprising:
a weighting coefficient correlator for correlating weighting coefficients with the order of the media content in the ordered feature space and/or ordered metadata space;
a weighting coefficient adjustment unit for allowing a user to adjust the weighting coefficients based on the correlation between the weighting coefficients and the order of the media content items in the ordered feature space and/or ordered metadata space.

10. The media content ordering system of claim 9,
wherein the weighting coefficient correlator is configured to determine which weighting coefficients are relatively high for media content items of interest.

11. The media content ordering system of claim 9 or 10, wherein the weighting coefficient adjustment unit is configured to present the user with a user interface (UI) that enables the user to identify relevant weighting coefficients and to enable the user to change the weighting coefficients.

12. The media content ordering system of any of the previous claims, further comprising:
a metadata input unit for inputting metadata related to desired media content items;
a desired content input unit for inputting an indication regarding desired content; and/or
a desired feature input unit for inputting an indication regarding a desired feature.

13. A method for ordering content in a content database that holds a plurality of media content items, wherein each media content item is associated with metadata describing that media content item, the method comprising the steps of:
performing feature analysis regarding different features on each of the media content items comprised in the content database;
for each analyzed feature, outputting a feature vector that describes a presence of the feature in the media content item;
ordering the media content items in an ordered metadata space based on the associated metadata;
applying a weighting using weighting coefficients to the outputted feature vectors;
ordering the weighted outputted feature vectors in an ordered feature vector space;
changing the weighting coefficients such that a difference between the order of the media content items in the ordered feature space and the order of the media content items in the ordered metadata space is minimized.

14. The method for ordering content of claim 13, further comprising:
retrieving a desired media content item from the content database and suggesting and/or retrieving media content items that are similar to said desired media content item; and/or
correlating weighting coefficients with the order of the media content items in the ordered feature space and/or ordered metadata space, and allowing a user to adjust the weighting coefficients based on the correlation between the weighting coefficients and the order of the media content in the ordered feature space and/or ordered metadata space.

15. A computer-readable storage medium comprising instructions for performing the method as defined in claim 13 or 14.
